# EUROPÄISCHE PATENTANMELDUNG

(11) **EP 4 455 515 A1**
(43) Veröffentlichungstag der Anmeldung: **30.10.2024**
(21) Anmeldenummer: 23169960.4
(22) Anmeldetag: 26.04.2023
(51) Int. Cl.: F16H 57/08

(54) **PLANETENGETRIEBE MIT WELLE-NABE-VERBINDUNG**

(71) Anmelder: Flender GmbH, 46395 Bocholt (DE)
(72) Erfinder: VENNEMANN, Michael, 46395 Bocholt (DE); VAN ACKEN, Lars, 46395 Bocholt (DE); WILTING, Maik, 46395 Bocholt (DE); DEGELING, Markus, 46395 Bocholt (DE)
(74) Vertreter: Michalski Hüttermann & Partner Patentanwälte mbB

(57) **Zusammenfassung**

Die Erfindung betrifft ein Planetengetriebe 10 für eine über einen Rotor 106 angetriebene Windkraftanlage 100 mit zumindest zwei in einem Getriebegehäuse 12 um eine Drehachse A_{D} umlaufenden Planetenstufen 14, wobei jede der Planetenstufen 14 einen Planetenträger 16und ein Hohlrad 20 aufweist und der erste Planetenträger 16 zumindest mittelbar mit dem Rotor 106 antriebsverbunden ist und wobei jeder der Planetenträger 16 jeweils mehrere mit dem Planetenträger 16 umlaufend und wechselseitig mit dem Hohlrad 20 und einem Sonnenrad 22 in einem schrägverzahnten Verzahnungseingriff stehende Planetenräder 18 aufweist, wobei das Sonnenrad 22 der ersten Planetenstufe 16 über eine Welle-Nabe-Verbindung 30 mit dem zweiten Planetenträger 16 antriebsverbunden ist. Die Welle-Nabe-Verbindung 30 ist axial versetzt zu dem Bereich des Sonnenrades 22 und der Planetenräder 18 der ersten Planetenstufe 14 angeordnet.

## Beschreibung

Die Erfindung betrifft ein Planetengetriebe für eine über einen Rotor angetriebene Windkraftanlage mit zumindest zwei in einem Getriebegehäuse um eine Drehachse A_{D} umlaufenden Planetenstufen, wobei jede der Planetenstufen einen Planetenträger und ein Hohlrad aufweist und der erste Planetenträger zumindest mittelbar mit dem Rotor antriebsverbunden ist und wobei jeder der Planetenträger jeweils mehrere mit dem Planetenträger umlaufend und wechselseitig mit dem Hohlrad und einem Sonnenrad in einem schrägverzahnten Verzahnungseingriff stehende Planetenräder aufweist, wobei das Sonnenrad der ersten Planetenstufe über eine Welle-Nabe-Verbindung mit dem zweiten Planetenträger antriebsverbunden ist.

Der Aufbau des Antriebsstrangs einer Windkraftanlage ist derart, dass der Rotor eine in einer Hauptlagereinheit gelagerte Hauptwelle antreibt und die Hauptwelle mit einem in der Regel als Planetengetriebe ausgeführten Getriebe verbunden ist und über das Getriebe eine Generatoreinheit antreibt. Das Planetengetriebe umfasst meist mehrere Planetenstufe, wobei die Hauptwelle in der Regel den Planetenträger der ersten Planetenstufe antreibt und über das Sonnenrad der Planetenstufe in Richtung Generator abgetrieben wird. Die Verzahnung der Planetenstufen ist schrägverzahnt. Im Hinblick auf die Lagerung des Antriebsstrangs ist zu unterscheiden zwischen der Lagerung der Hauptwelle über die Hauptlagereinheit und der lagermäßigen Abstützung der in der ersten Planetenstufe wirkenden Axialkraft, die infolge der Schrägverzahnung der Verzahnungskomponenten entsteht. Die jeweilige Lagerung kann je nach Anwendungsfall unterschiedlich ausgeführt sein.

Planetengetriebe mit mehreren Planetenstufen sind üblicherweise mit Sonnenrädern ausgestattet, die als Ritzel ausgeführt sind und die über eine Welle-Nabe-Verbindung mit dem Planetenträger der jeweils nachfolgenden Planetenstufe verbunden sind. Der jeweilige Planetenträger weist hierzu einen Axialflansch auf, der in die vorgelagerte Planetenstufe hineinragt und auf dem eine Außenverzahnung vorgesehen ist, die mit eine korrespondierenden Innenverzahnung des Sonnenrades eine Verzahnungspaarung bildet. Durch diesen Aufbau ergeben sich Einschränkungen bei der Auslegung der Bauteildurchmesser und der Montierbarkeit der Bauteile. Zudem ist die Verzahnungspaarung zwischen Sonnenrad und Axialflansch des Planetenträgers aufwändig in der Fertigung. Die Lagerung zur Abstützung der in der ersten Planetenstufe entstehenden Axialkraft umfasst üblicher eine Wälzlagerpaarung, deren eines Wälzlager rotorseitig des Planetenträgers der zweiten Planetenstufe und deren anderes Wälzlager generatorseitig dieses zweiten Planetenträgers angeordnet ist. Die Wälzlager müssen über entsprechende Abstützflansche gehäuseseitig gehalten sein, was zu hohen axialen Baulängen, einem hohen Gesamtgewicht der Bauteile und einer eingeschränkten Möglichkeit der Staffelung der Durchmesser der Sonnenräder bzw. Sonnenritzel führt. Es besteht ein ständiges Bedürfnis die Welle-Nabe-Verbindung zwischen dem Sonnenrad und dem Planetenträger der nächsten Planetenstufe platzsparender zu gestalten.

Es ist die Aufgabe der Erfindung Maßnahmen aufzuzeigen, die eine platzsparendere Welle-Nabe-Verbindung zwischen dem Sonnenrad und dem Planetenträger der nächsten Planetenstufe ermöglichen.

Die Lösung der Aufgabe erfolgt durch ein Planetengetriebe mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft ein Planetengetriebe für eine über einen Rotor angetriebene Windkraftanlage mit zumindest zwei in einem Getriebegehäuse um eine Drehachse A_{D} umlaufenden Planetenstufen, wobei jede der Planetenstufen einen Planetenträger und ein Hohlrad aufweist und der erste Planetenträger zumindest mittelbar mit dem Rotor antriebsverbunden ist und wobei jeder der Planetenträger jeweils mehrere mit dem Planetenträger umlaufend und wechselseitig mit dem Hohlrad und einem Sonnenrad in einem schrägverzahnten Verzahnungseingriff stehende Planetenräder aufweist, wobei das Sonnenrad der ersten Planetenstufe über eine Welle-Nabe-Verbindung mit dem zweiten Planetenträger antriebsverbunden ist und die Welle-Nabe-Verbindung axial versetzt zu einem Verzahnungseingriffsbereich dem Sonnenrad und den Planetenrädern der ersten Planetenstufe angeordnet ist.

Das Planetengetriebe kann zwei oder weitere Planetenstufen umfassen. Die jeweils letzte Planetenstufe kann mittelbar oder unmittelbar einen Generator antreiben. Bei einem mittelbaren Antrieb kann eine zwischengeschaltete Stirnradstufe vorgesehen sein. Der Planetenträger kann korbartig aufgeführt sein. Die Drehachse A_{D}, um die die zumindest eine Planetenstufe während eines Betriebes umläuft, legt vorliegend die Axialrichtung fest, so dass sich aus dieser Axialrichtung die jeweiligen Radialrichtungen ergeben.

Die Planetenräder sind über Planetenachsen an dem Planetenträger gehalten. Die Planetenachsen laufen parallel und versetzt zu der Drehachse A_{D}. Die Planetenträger sind in eine radiale Richtung nach innen und eine radiale Richtung nach außen von dem Planetenträger bzw. den Seitenwangen freigestellt und die Planetenräder stehen über eine jeweilige Schrägverzahnung in einem Eingriff mit einem Hohlrad und einem Sonnenrad.

Der Verzahnungseingriffsbereich zwischen dem Sonnenrad und den Planetenrädern weist eine definierte axiale Breite auf. Die Welle-Nabe-Verbindung zwischen dem Sonnenrad und dem Planetenträger der jeweils nachfolgenden Planetenstufe befindet sich nicht mehr innerhalb dieser axialen Breite der Verzahnung, sondern ist zu dieser in axialer Richtung versetzt. Die Welle-Nabe-Verbindung ist in Richtung der nachfolgenden Planetenstufe axial versetzt. Indem die Welle Narbe Verbindung axial versetzt ist, weist das Sonnenrad eine axiale Breite auf, infolge der das Sonnenrad auch als Sonnenwelle bezeichnet werden kann. Die Sonnenwelle besteht in axialer Richtung betrachtet zumindest aus zwei voneinander unterscheidbaren Abschnitten, nämlich zunächst den Abschnitt, der die Verzahnung für das jeweilige Planetenrad trägt, und außerdem den Abschnitt, der einen Teil der Welle-Nabe-Verbindung bildet. Insbesondere kann vorgesehen sein, dass ein Zwischenabschnitt vorgesehen ist, der die beiden anderen Abschnitte miteinander verbindet und zur axialen Breite des Sonnenrades beiträgt.

Indem der Verzahnungseingriffsbereich und die Welle-Nabe-Verbindung nun nicht mehr in dem gleichen axialen Bereich liegen, kann die radiale Ausdehnung des Sonnenrades deutlich verringert werden. Insbesondere kann die daraus resultierende geänderte Geometrie dazu genutzt werden den Innendurchmesser des sich nunmehr als Sonnenwelle darstellendes Sonnenrad zu vergrößern, um hierdurch einen vereinfachten Montageablauf beispielsweise der Bauelemente der zweiten Planetenstufe zu erhalten. Zudem wird weniger Bauraum nach radial innen und ein geringer Materialeinsatz benötigt. Weiterhin ergeben sich für die Welle-Nabe-Verbindung mehrere Gestaltungsmöglichkeiten, dadurch dass diese axial in Richtung der zweiten Planetenstufe versetzt ist, und zwar sowohl im Hinblick auf die Positionierung als auch im Hinblick auf die genaue Ausgestaltung der Verbindungsmittel.

In einer bevorzugten Ausgestaltung des Planetengetriebes ist ein durch einen Trennspalt gebildeter Axialbereich zwischen der ersten und der zweiten Planetenstufe angeordnet und die Welle-Nabe-Verbindung ist zwischen dem Sonnenrad und dem zweiten Planetenträger in dem Axialbereich angeordnet. In diesem die erste Planetenstufe von der zweiten Planetenstufe trennenden Axialbereich kann beispielsweise ein Abstützflansch angeordnet sein, über den der zweite Planetenträger gegenüber dem Gehäuse gelagert ist und über den die Axialkraft im Reversierbetrieb der Windkraftanlage abgestützt wird. Der trennende Axialbereich zwischen den beiden Planetenstufen kann in vorteilhafter Weise auch dafür genutzt werden, die Welle-Nabe-Verbindung geometrisch zumindest teilweise in diesen Bereich hineinzulegen.

In einer weiteren bevorzugten Ausgestaltung des Planetengetriebes ist die Welle-Nabe-Verbindung zwischens jeweiligen und sich in axialer Richtung überlappenden Flanschabschnitten des Sonnenrades und des zweiten Planetenträgers gebildet. Hierdurch beansprucht die Welle-Nabe-Verbindung nur radialen Bauraum und kann axial kurz bauend ausgeführt werden.

In möglichen konkreten Ausgestaltungen kann die Welle-Nabe-Verbindung eine formschlüssige Verbindung oder eine kraftschlüssige Verbindung zwischen dem Sonnenrad und dem zweiten Planetenträger umfassen. Eine formschlüssige Verbindung kann beispielsweise durch eine das Sonnenrad und den zweiten Planetenträger wechselseitig gebildete Verzahnungspaarung gebildet sein. Hierbei befindet sich in einer ersten Variante die Verzahnungspaarung auf einem Durchmesser mit einer durch das Sonnenrad und die Planetenräder der ersten Planetenstufe wechselseitig gebildeten Laufverzahnungspaarung. Hierdurch ist es möglich, dass auf dem Sonnenrad die Laufverzahnung und die Verzahnung der Welle-Nabe-Verbindung in einem zusammenhängenden Fertigungsschritt erzeugt werden. In einer zweiten Variante kann vorgesehen sein, dass die Verzahnungspaarung sich auf einem kleineren Durchmesser als eine durch das Sonnenrad und die Planetenräder der ersten Planetenstufe wechselseitig gebildete Laufverzahnungspaarung befindet. Für beiden Varianten ist bevorzugt vorgesehen, dass die Verzahnungspaarung sich wechselseitig durch eine Außenverzahnung des Sonnenrades und eine Innenverzahnung des zweiten Planetenträgers zusammensetzt. Die axiale Sicherung wird bevorzugt realisiert, indem das Sonnenrad in axialer Richtung gegen den zweiten Planetenträger ansteht und über einen mit dem zweiten Planetenträger verbundenen Sicherungsring in entgegengesetzter axialer Richtung gesichert ist.

In einer weiteren bevorzugten Ausgestaltung umfasst die Welle-Nabe-Verbindung ein innerhalb des Sonnenrades einsitzendes Spreizelement, zur Beaufschlagung des Sonnenrads nach radial außen gegen den zweiten Planetenträger. Das Spreizelement kann mehrteilig aufgebaut sein und einen Ringkern und einen zwischen dem Ringkern und dem Sonnenrad einsitzenden und in axialer Richtung beaufschlagten Keilring aufweisen. Wiederum alternativ kann die Welle-Nabe-Verbindung mehrere umfänglich angeordnete Scherkraftelementen umfassen, wobei die Scherkraftelementen in axialer Richtung oder in radialer Richtung ausgerichtet sind.

In einer weiteren bevorzugten Ausgestaltung des Planetengetriebes, die insbesondere die beschriebene Welle-Nabe-Verbindung umfasst, ist synergetisch vorgesehen, dass der zweite Planetenträger auf der von dem Rotor abgewandten Seite über eine angestellte Kegelrollenlagerung in einem Abstützflansch des Getriebegehäuse drehbar gelagert ist. Die angestellte Kegelrollenlagerung kann in einem Lagerpaket zusammengefasst sein. Über diese angestellte Kegelrollenlagerung können insbesondere die durch die Schrägverzahnung während des Betriebes eingebrachten Axialkräfte aufgenommen werden, und zwar in beiden axialen Richtungen. Somit kann in vorteilhafter Weise auf das herkömmlich zwischen der ersten und der zweiten Planetenstufe angeordnete Wälzlager und den entsprechenden Abstützflansch verzichtet werden. Durch den Wegfall dieses Abstützflansches kann der freigewordene Bauraum entweder eingespart werden, so dass das gesamte Planetengetriebe kürzer bauen kann, oder der freigewordene Bauraum kann zumindest teilweise für die Anordnung und Ausgestaltung der Welle-Nabe-Verbindung bereitgestellt werden.

Die Aufgabe wird zudem gelöst durch ein Verfahren zur Lagereinstellung und Montage eines Planetengetriebes, wobei das Planetengetriebe eine Welle-Nabe-Verbindung in einer der zuvor beschriebenen Ausführungen und der zweite Planetenträger auf der von dem Rotor abgewandten Seite über eine angestellte Kegelrollenlagerung aufweist, bei dem
- das Sonnenrad der ersten Planetenstufe und der zweite Planetenträger über die Welle-Nabe-Verbindung zu einer Einheit miteinander verbunden werden,
- die Einheit über die Kegelrollenlagerung in dem Abstützflansch des Getriebegehäuses positioniert wird und
- nach einer maßlichen Einstellung der Kegelrollenlagerung das Sonnenrad der zweiten Planetenstufe durch das als Hohlwelle ausgebildete Sonnenrad der ersten Planetenstufen in der zweiten Planetenstufe positioniert und montiert wird.

Die Aufgabe wird zudem gelöst durch einen Antriebsstrang für eine Windkraftanlage zur drehmomentübertragenden Verbindung eines Rotors mit einem Generator, umfassend eine Hauptlagereinheit mit einem Lagergehäuse und einer Hauptwelle und ein über die Hauptwelle angetriebenes Getriebe, wobei das Getriebe den Generator zumindest mittelbar antreibt und das Getriebe als Planetengetriebe nach einer der beschriebenen Ausführungsformen ausgebildet ist.

Gleichermaßen wird die Aufgabenstellung gelöst durch eine Windkraftanlage, mit einem Rotorflansch mit einem Rotor und einem Generator, wobei ein an einem Maschinenträger gehaltener und den Rotorflansch mit dem Generator verbindender Antriebsstrang vorgesehen ist und der Antriebsstrang wie zuvor beschrieben ausgebildet ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Darstellung einer Windkraftanlage,
Fig. 2: ein als Planetengetriebe ausgeführtes Getriebe für eine Windkraftanlage und
Fig. 3 bis 7: verschiedene Varianten einer Welle-Nabe-Verbindung zwischen den Planetenstufen in einem Planetengetriebe.

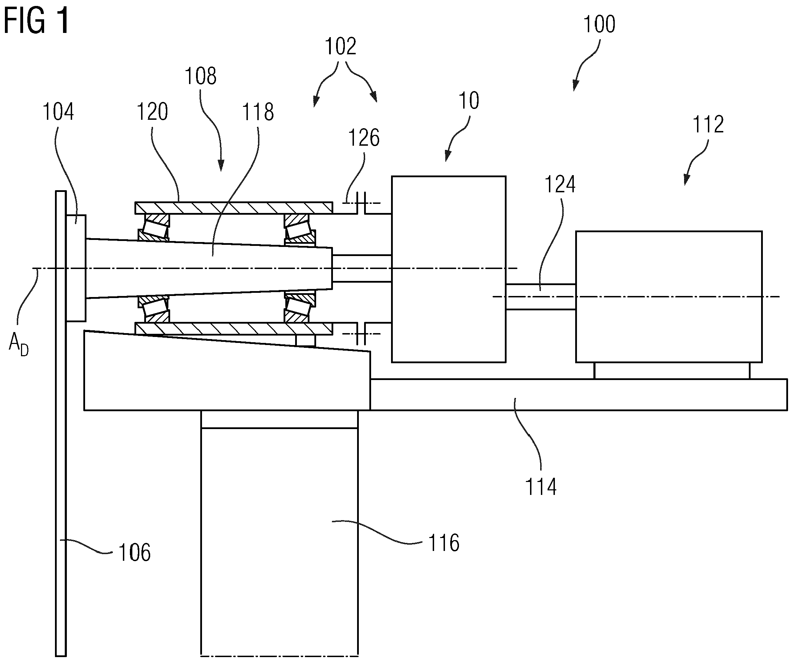

Die Figur 1 zeigt in schematischer und nicht maßstabsgetreuer Darstellung eine Windkraftanlage 100 in einer möglichen Ausführung. Wesentliches Element der Windkraftanlage 100 ist ein Antriebstrang 102, der vorliegend strukturell einen Rotorflansch 104 mit einem Rotor 106, eine Hauptlagereinheit 108, ein Getriebe 10 und einen Generator 112 umfasst. Über einen Maschinenträger 114 werden zumindest die Hauptlagereinheit 108 und der Generator 112 über einen Turm 116 gegenüber einem nicht dargestellten Boden abgestützt. Die Hauptlagereinheit 108 umfasst eine Hauptwelle 118, die über eine Wälzlagerung gegenüber einem Lagergehäuse 120 der Hauptlagereinheit 108 drehbar um eine Drehachse A_{D} gelagert ist. An einem Ende der Hauptwelle 118 ist der Rotorflansch 104 und an diesem der Rotor 106 gehalten. Das andere Ende der Hauptwelle 118 ist vorliegend starr mit dem Getriebe 10 antriebsmäßig verbunden, um ein von dem Rotor 106 aufgebrachtes Antriebsmoment in das Getriebe 10 einzuleiten. Das Getriebe 10 ist als Planetengetriebe mit einer oder mehreren Planetenstufen ausgeführt. Das Getriebe 10 ist über eine Generatorwelle 124 antriebsmäßig mit dem Generator 112 verbunden. Über einen Flansch 126 ist das Lagergehäuse 120 mit dem Getriebe 10 verbunden. Ein Reaktionsmoment des Getriebes 10 ist über den Flansch 126 gegenüber dem Maschinenträger 114 abgestützt. In einer alternativen Anordnung - nicht dargestellt - der Windkraftanlage 100 kann das Getriebe 10 über eine Drehmomentstütze gegenüber dem Maschinenträger 114 abgestützt werden.

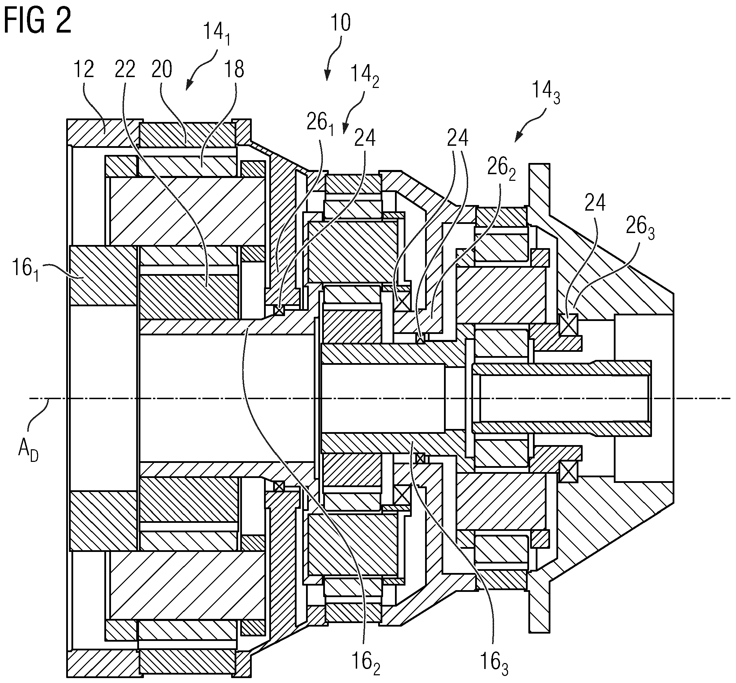

Die Figur 2 zeigt ein als Planetengetriebe 10 ausgeführtes Getriebe, wie es beispielsweise in einer in Figur 1 dargestellten Windkraftanlage 100 verbaut sein kann. Das Planetengetriebe 10 umfasst beispielsweise drei seriell angeordnete Planetenstufen 14₁ bis 14s, die um eine Drehachse A_{D} umlaufend in einem Getriebegehäuse 12 angeordnet sind. Jede Planetenstufe 14₁ bis 14₃ ist abgesehen von ihrer Dimensionierung entsprechend aufgebaut und weist einen Planetenträger 16, ein Hohlrad 20, ein Sonnenrad 22 und mehrere mit dem Planetenträger 16 umlaufend und wechselseitig mit dem Hohlrad 20 und dem Sonnenrad 22 in einem schrägverzahnten Verzahnungseingriff stehende Planetenräder 18 auf. Ein Merkmal des Aufbaus des Planetengetriebes 10 besteht darin, dass jedes der Sonnenräder 22 mit dem Planetenträger 16 der nachfolgenden Planetenstufe 14 drehfest und axial verschiebefest verbunden ist. Ein weiteres Merkmal des Aufbaus besteht darin, dass die Planetenträger 16₂ und 16₃ der zweiten und der dritten Planetenstufe 14₂ und 14₃ jeweils über Lager 24 an gehäuseseitigen Abstützflanschen 26 gelagert sind. Es sind drei Abstützflansche 26₁ bis 26₃ vorgesehen, von denen die ersten beiden jeweils zwischen den Planetenstufen 14₁ bis 14₃ und einer ausgangsseitig der dritten Planetenstufe 14₃ angeordnet ist. Über den ersten Abstützflansch 26₁ und das Lager 24 wird die Axialkraft der zweiten Planetenstufe 14₂ und über den zweiten Abstützflansch 26₂ und das radial innere Lager 24 wird die Axialkraft der dritten Planetenstufe 14₃ im Reversierbetrieb abgestützt. Über den zweiten Abstützflansch 26₂ und das radial äußere Lager 24 wird die Axialkraft der ersten Planetenstufe 14₁ und über den dritten Abstützflansch 26₃ und das Lager 24 wird die Axialkraft der zweiten Planetenstufe 14₂ im Nennbetrieb abgestützt. Die Axialkraft der dritten Planetenstufe 14₃ wird über ein rotorseitiges Lager einer Hohlwelle abgestützt, die gegenüber dem Getriebegehäuse 12 drehbar gelagert ist.

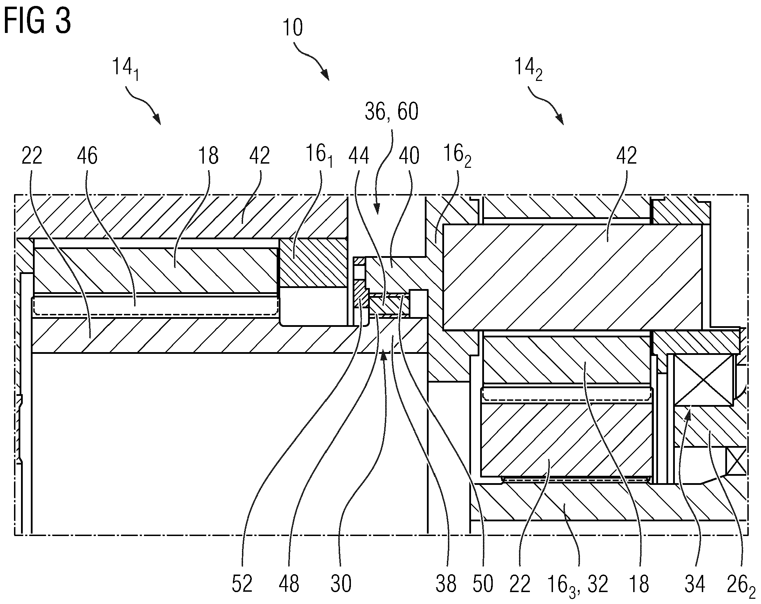

Anhand der Figuren 3 bis 7 werden verschiedene Varianten der Welle-Nabe-Verbindung 30 beschrieben, über die das Sonnenrad 22 der ersten Planetenstufe 14₁ mit dem zweiten Planetenträger 16₂ antriebsverbunden ist. Die Figuren 3 bis 7 werden zunächst bezüglich ihrer Gemeinsamkeiten beschrieben.

Die Figuren 3 bis 7 zeigen einen Ausschnitt eines Planetengetriebes 10 mit vorliegend beispielsweise drei Planetenstufen 14₁ bis 14₃. Gezeigt ist von der ersten und der zweiten Planetenstufe 14₁, 14₂ jeweils der Planetenträger 16₁ ,16₂ mit einem Planetenrad 18 und das Sonnenrad 22. Von der im Übrigen nicht näher gezeigten dritten Planetenstufe 14₃ ist lediglich der axial in das Sonnenrad 22 der zweiten Planetenstufe 14₂ ragende Antriebsflansch 32 dargestellt. Auf der dem Generator 112 zugewandten Seite der zweite Planetenstufe 14₂ ist eine angestellte Kegelrollenlagerung 34 angeordneten, die in dem Abstützflansch 26₂ aufgenommen ist und über die der Planetenträger 16₂ der zweiten Planetenstufe 14₂ gegenüber dem Getriebegehäuse 12 drehbar gelagert ist. Zu erkennen ist, dass das eine der beiden Lager der Kegelrollenlagerung 34 das herkömmlich zwischen der ersten und zweiten Planetenstufe 14₁, 14₂ angeordnete Wälzlager 24 ersetzt, vergleiche Figur 2, so dass sich zwischen der ersten und zweiten Planetenstufe 14₁, 14₂ vorliegend ein durch einen Trennspalt 36 gebildeter Axialbereich 60 befindet, in dem zumindest teilweise die Welle-Nabe-Verbindung 30 angeordnet ist. Zu erkennen ist ferner, dass zwischen der ersten und zweiten Planetenstufe 14₁, 14₂ kein Abstützflansch 26 - vergleiche Figur 2 - mehr angeordnet ist. Die Welle-Nabe-Verbindung 30 ist nunmehr axial versetzt zu dem Verzahnungseingriffsbereich 28 zwischen dem Sonnenrad 22 und den Planetenrädern der ersten Planetenstufe 14₁ angeordnet. Die Welle-Nabe-Verbindung 30 ist zwischen jeweiligen und sich in axialer Richtung überlappenden Flanschabschnitten 38, 40 des Sonnenrades 22 und des zweiten Planetenträgers 16₂ gebildet. Die radiale Ausdehnung des Sonnenrades 22 ist gegenüber der herkömmlichen Form deutlich reduziert, da die Welle-Nabe-Verbindung 30, die eine gewisse radiale Ausdehnung beansprucht, axial versetzt in den Trennspalt 36 verlegt ist. Der Flanschabschnitt 40 kann im Wesentlichen auf der gleichen radialen Position wie die Planetenachsen 42 der zweiten Planetenstufe 16₂ liegen.

Bei der in Figur 3 gezeigten Variante befindet sich die Verzahnungspaarung 44 der Welle-Nabe-Verbindung 30 auf einem Durchmesser mit einer durch das Sonnenrad 22 und die Planetenräder 18 der ersten Planetenstufe 14₁ wechselseitig gebildeten Laufverzahnungspaarung 46. Die Verzahnungspaarung 44 setzt sich wechselseitig durch eine Außenverzahnung 48 des Sonnenrades 22 und eine Innenverzahnung 50 des zweiten Planetenträgers 16₂ zusammen. Die Verzahnungspaarung 44 der Welle-Nabe-Verbindung 30 und die Laufverzahnungspaarung 46 können somit die gleichen Eigenschaften haben und in einem Fertigungsschritt hergestellt werden. Das Sonnenrad 22 steht in axialer Richtung gegen den zweiten Planetenträger 16₁ an und ist über einen mit dem zweiten Planetenträger 16₂ verbundenen Sicherungsring 52 in entgegengesetzter axialer Richtung gesichert.

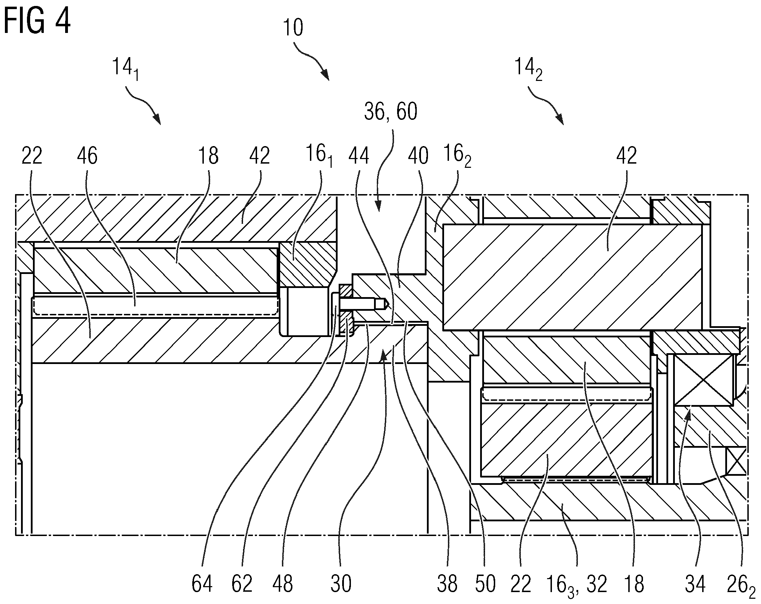

Die Figur 4 zeigt eine weitere Variante der Welle-Nabe-Verbindung 30, die sich von der in Figur 3 gezeigten Variante dadurch unterscheidet, dass sich die Verzahnungspaarung 44 der Welle-Nabe-Verbindung 30 auf einem kleineren Durchmesser als eine durch das Sonnenrad 22 und die Planetenräder 18 der ersten Planetenstufe 14₁ wechselseitig gebildete Laufverzahnungspaarung 46 befindet. Hierdurch können die Verzahnungspaarung 44 der Welle-Nabe-Verbindung 30 und die Laufverzahnungspaarung 46 unterschiedliche Eigenschaften haben. Im Übrigen wird auf die Beschreibung zu der Figur 3 verwiesen.

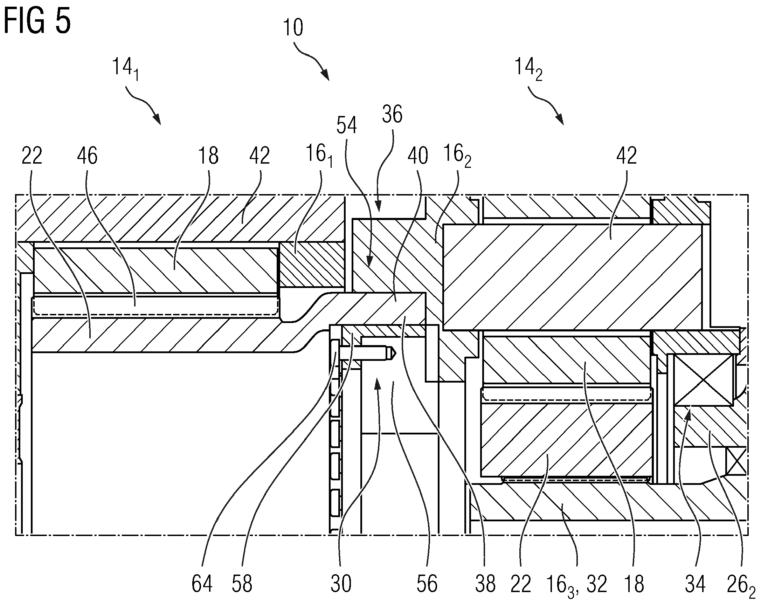

Die Figur 5 zeigt eine weitere Variante der Welle-Nabe-Verbindung 30, wobei diese ein innerhalb des Sonnenrades 22 einsitzendes Spreizelement 54 umfasst, zur Beaufschlagung des Sonnenrads 22 nach radial außen gegen den zweiten Planetenträger 16₂. Das Spreizelement 54 kann mehrteilig aufgebaut sein und einen Ringkern 56 und einen zwischen dem Ringkern 56 und dem Sonnenrad 22 einsitzendes und in axialer Richtung beaufschlagten Keilring 58 aufweisen.

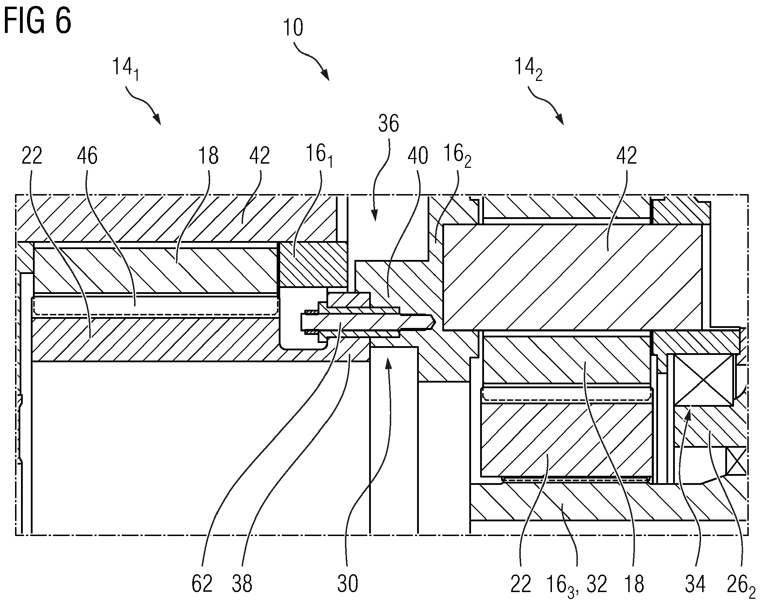

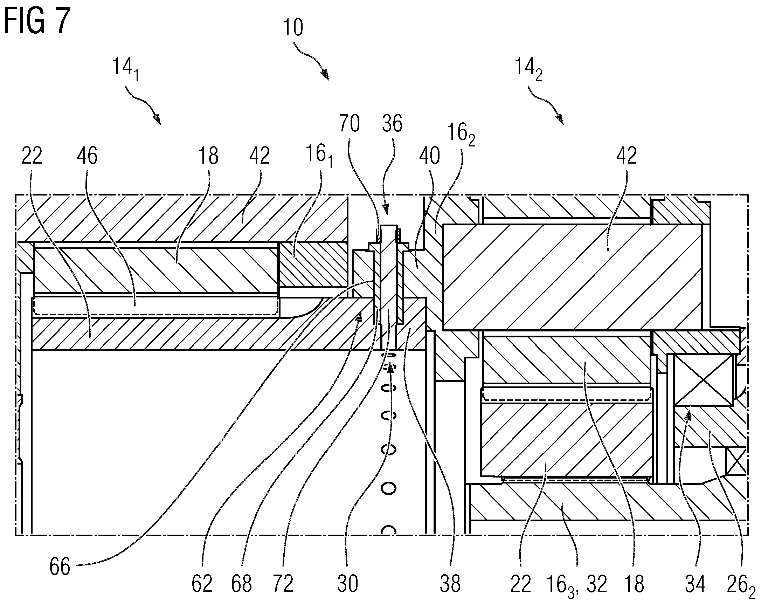

In den Figuren 5 und 6 sind Varianten der Welle-Nabe-Verbindung 30 gezeigt, bei den die Welle-Nabe-Verbindung 30 mehrere umfänglich angeordnete Scherkraftelemente 62 umfassen, wobei die Scherkraftelemente 30 in axialer Richtung - Figur 6 - oder in radialer Richtung - Figur 7 - ausgerichtet sein können.

Das Verfahren zur Lagereinstellung und Montage eines Planetengetriebes 10 wird nachfolgend beschrieben. Zunächst werden in einem Verfahrensschritt V01 das Sonnenrad 22 der ersten Planetenstufe 14₁ und der zweite Planetenträger 16₂ über die Welle-Nabe-Verbindung 30 zu einer Einheit miteinander verbunden. Bei den zu den Figuren 3 und 4 beschriebenen Varianten wird dabei zunächst das Sonnenrad 22 und der zweite Planetenträger 16₂ über die jeweilige Verzahnungspaarung 44 ineinander geschoben. Hiernach wird der einteilig oder mehrteilig ausgeführte Sicherungsring 52 positioniert und umfänglich mit einer Mehrzahl an Schrauben 64 befestigt. In einem Verfahrensschritt V02 wird die vormontierte Einheit bestehend aus Sonnenrad 22 und zweitem Planetenträger 16₂ über die Kegelrollenlagerung 34 in dem Abstützflansch 262 des Getriebegehäuses 12 positioniert. In einem Verfahrensschritt V03 wird nach einer maßlichen Einstellung der Kegelrollenlagerung 34 das Sonnenrad 22 der zweiten Planetenstufe 14₂ durch das als Hohlwelle ausgebildete Sonnenrad 22 der ersten Planetenstufen 14₁ in der zweiten Planetenstufe 14₂ positioniert und montiert.

Der Verfahrensschritt V01 wird bei der in Figur 5 beschriebenen Variante angepasst ausgeführt, nämlich indem zunächst der Keilring 58 und der Ringkern 56 in das Innere des Sonnenrades 22 positioniert wird und danach der Ringkern 56 mit einer geringen Anzahl an Schrauben 64 fixiert und leicht vorgespannt wird und in Anschluss hieran das Sonnenrad 22 und der zweite Planetenträger 16₂ im Bereich der Flanschabschnitte 38, 40 ineinander geschoben werden. Hiernach werden die verbleibenden Schrauben 64 montiert und der Ringkern 56 mit allen Schrauben 64 vollständig gespannt.

Der Verfahrensschritt V01 wird bei den in den Figuren 6 und 7 beschriebenen Varianten wiederum angepasst ausgeführt, nämlich indem die Sonnenwelle 22 und der zweite Planetenträger 16₂ zunächst über eine Zentrierungshilfe - nicht dargestellt - zueinander positioniert werden und anschließend die Scherbuchsen 68 in die entsprechenden Bohrungen 66 eingesetzt werden. Hiernach werden die Stehbolzen 72 eingesetzt und mittels den Muttern 70 angezogen.

### Bezugszeichenliste

- 10: Planetengetriebe
- 12: Getriebegehäuse
- 14: Planetenstufe
- 16: Planetenträger
- 18: Planetenräder
- 20: Hohlrad
- 22: Sonnenrad
- 24: Wälzlagerung
- 26: Abstützflansch
- 28: Verzahnungseingriffsbereich
- 30: Welle-Nabe-Verbindung
- 32: Antriebsflansch
- 34: Kegelrollenlagerung
- 36: Trennspalt
- 38: Flanschabschnitt
- 40: Flanschabschnitt
- 42: Planetenachsen
- 44: Verzahnungspaarung
- 46: Laufverzahnungspaarung
- 48: Außenverzahnung
- 50: Innenverzahnung
- 52: Sicherungsring
- 54: Spreizelement
- 56: Ringkern
- 58: Keilring
- 60: Axialbereich
- 62: Scherkraftelemente
- 64: Schrauben
- 66: Bohrung
- 68: Scherbuchse
- 70: Mutter
- 72: Stehbolzen
- 100: Windkraftanlage
- 102: Antriebstrang
- 104: Rotorflansch
- 106: Mehrblattrotor
- 108: Hauptlagereinheit
- 112: Generator
- 114: Maschinenträger
- 116: Turm
- 118: Hauptwelle
- 120: Lagergehäuse
- 124: Generatorwelle
- 126: Flansch

## Patentansprüche

1. Planetengetriebe (10) für eine über einen Rotor (106) angetriebene Windkraftanlage (100) mit zumindest zwei in einem Getriebegehäuse (12) um eine Drehachse A_{D} umlaufenden Planetenstufen (14₁, 14₂), wobei jede der Planetenstufen (14₁, 14₂) einen Planetenträger (16) und ein Hohlrad (20) aufweist und der erste Planetenträger (16₁) zumindest mittelbar mit dem Rotor (72) antriebsverbunden ist und wobei jeder der Planetenträger (16₁, 16₂) jeweils mehrere mit dem Planetenträger (16₁, 16₂) umlaufend und wechselseitig mit dem Hohlrad (20) und einem Sonnenrad (22) in einem schrägverzahnten Verzahnungseingriff stehende Planetenräder (18) aufweist,
wobei das Sonnenrad (22) der ersten Planetenstufe (16₁) über eine Welle-Nabe-Verbindung (30) mit dem zweiten Planetenträger (16₂) antriebsverbunden ist,
**dadurch gekennzeichnet, dass**
die Welle-Nabe-Verbindung (30) axial versetzt zu einem Verzahnungseingriffsbereich (28) dem Sonnenrad (22) und den Planetenrädern (18) der ersten Planetenstufe (14₁) angeordnet ist.

2. Planetengetriebe (10) nach Anspruch 1, **dadurch gekennzeichnet, dass** ein durch einen Trennspalt (36) gebildeter Axialbereich zwischen der ersten und der zweiten Planetenstufe (141, 14₂) angeordnet ist und die Welle-Nabe-Verbindung (30) zwischen dem Sonnenrad (22) und dem zweiten Planetenträger (16₂) in dem Axialbereich angeordnet ist.

3. Planetengetriebe (10) nach Anspruch 1 oder 2, **dadurch gekennzeichnet, dass** die Welle-Nabe-Verbindung (30) zwischen jeweiligen und sich in axialer Richtung überlappenden Flanschabschnitten (38, 40) des Sonnenrades (22) und des zweiten Planetenträgers (16₂) gebildet ist.

4. Planetengetriebe (10) nach einem der Ansprüche 1 bis 3, **dadurch gekennzeichnet, dass** die Welle-Nabe-Verbindung (30) eine formschlüssige Verbindung oder eine kraftschlüssige Verbindung zwischen dem Sonnenrad (22) und dem zweiten Planetenträger (16₂) umfasst.

5. Planetengetriebe (10) nach einem der Ansprüche 1 bis 4, **dadurch gekennzeichnet, dass** die Welle-Nabe-Verbindung (30) durch eine das Sonnenrad (22) und den zweiten Planetenträger (16₂) wechselseitig gebildete Verzahnungspaarung (44) gebildet ist.

6. Planetengetriebe (10) nach Anspruch 5, **dadurch gekennzeichnet, dass** die Verzahnungspaarung (44) sich auf einem Durchmesser mit einer durch das Sonnenrad (22) und die Planetenräder (18) der ersten Planetenstufe (14₁) wechselseitig gebildeten Laufverzahnungspaarung (46) befindet.

7. Planetengetriebe (10) nach Anspruch 5 oder 6, **dadurch gekennzeichnet, dass** die Verzahnungspaarung (44) sich auf einem kleineren Durchmesser als eine durch das Sonnenrad (22) und die Planetenräder (18) der ersten Planetenstufe (14₁) wechselseitig gebildete Laufverzahnungspaarung (46) befindet.

8. Planetengetriebe (10) nach Anspruch 6 oder 7, **dadurch gekennzeichnet, dass** die Verzahnungspaarung (44) sich wechselseitig durch eine Außenverzahnung (48) des Sonnenrades (22) und eine Innenverzahnung (50) des zweiten Planetenträgers (16₂) zusammensetzt.

9. Planetengetriebe (10) nach einem der Ansprüche 5 bis 8, **dadurch gekennzeichnet, dass** das Sonnenrad (2) in axialer Richtung gegen den zweiten Planetenträger (16₂) ansteht und über einen mit dem zweiten Planetenträger (16₂) verbundenen Sicherungsring (52) in entgegengesetzter axialer Richtung gesichert ist.

10. Planetengetriebe (10) nach einem der Ansprüche 1 bis 4, **dadurch gekennzeichnet, dass** die Welle-Nabe-Verbindung (30) ein innerhalb des Sonnenrades (22) einsitzendes Spreizelement (54) umfasst, zur Beaufschlagung des Sonnenrads (22) nach radial außen gegen den zweiten Planetenträger (16₂).

11. Planetengetriebe (10) nach einem der Ansprüche 1 bis 4, **dadurch gekennzeichnet, dass** die Welle-Nabe-Verbindung (30) mehrere umfänglich angeordnete Scherkraftelemente (62) umfasst, wobei die Scherkraftelemente (62) in axialer Richtung oder in radialer Richtung ausgerichtet sind.

12. Planetengetriebe (10) nach einem der Ansprüche 1 bis 12, **dadurch gekennzeichnet, dass** der zweite Planetenträger (16₂) auf der von dem Rotor (106) abgewandten Seite über eine angestellte Kegelrollenlagerung (34) in einer Abstützflansch (26₂) des Getriebegehäuse (12) drehbar gelagert ist.

13. Verfahren zur Lagereinstellung und Montage eines Planetengetriebes (10), wobei das Planetengetriebe (10) nach einem der Ansprüche 1 bis 11 und 12 ausgebildet ist, bei dem
- das Sonnenrad (22) der ersten Planetenstufe (14₁) und der zweite Planetenträger (16₂) über die Welle-Nabe-Verbindung (30) zu einer Einheit miteinander verbunden werden,
- die Einheit über die Kegelrollenlagerung (34) in dem Abstützflansch (26₂) des Getriebegehäuses (12) positioniert wird und
- nach einer maßlichen Einstellung der Kegelrollenlagerung (34) das Sonnenrad (22) der zweiten Planetenstufe (14₂) durch das als Hohlwelle ausgebildete Sonnenrad (22) der ersten Planetenstufen (14₁) in der zweiten Planetenstufe (14₂) positioniert und montiert wird.

14. Antriebsstrang (102) für eine Windkraftanlage (100) zur drehmomentübertragenden Verbindung eines Rotors (106) mit einem Generator (112), umfassend eine Hauptlagereinheit (108) mit einem Lagergehäuse (120) und einer Hauptwelle (118) und ein über die Hauptwelle (118) angetriebenes Getriebe (10), wobei das Getriebe (10) den Generator (112) zumindest mittelbar antreibt, **dadurch gekennzeichnet, dass** das Getriebe (10) als Planetengetriebe nach einem der vorangegangenen Ansprüche ausgebildet ist.

15. Windkraftanlage (100), umfassend einen Rotorflansch (104) mit einem Rotor (106) und einen Generator (112), wobei ein an einem Maschinenträger (114) gehaltener und den Rotorflansch (104) mit dem Generator (112) verbindender Antriebsstrang (102) vorgesehen ist, **dadurch gekennzeichnet, dass** der Antriebsstrang (102) nach Anspruch 14 ausgebildet ist.
